# EUROPEAN PATENT APPLICATION

(11) **EP 4 509 720 A1**
(43) Date of publication of application: **19.02.2025**
(21) Application number: 23192223.8
(22) Date of filing: 18.08.2023
(51) Int. Cl.: F04D 29/38, B64D 13/00, F04D 25/12, F04D 29/32, F01D 5/22, F04D 19/00, F04D 29/54

(54) **FAN FOR AIRCRAFT INTERIOR**

(71) Applicant: B/E Aerospace, Inc., Winston-Salem, NC 27105 (US)
(72) Inventor: CASTILLO, Arnau, Maarssen, Utrecht 3607 AK (NL); PEREZ CAMACHO, Manuel, Nieuwegein, Utrecht, 3431 BH (NL)
(74) Representative: Dehns

(57) **Abstract**

A fan structure (2) for the interior of an aircraft. The fan structure (2) includes: a structure (18) of an aircraft interior defining an aperture (16), a spindle (14) configured to be rotatably driven about its axis by a motor, a central hub (6) mounted on the spindle (14) and a plurality of blades (4) extending outwardly from the central hub (6). The base (8) of each of the plurality of blades (4) is connected to the central hub (6) and the tip of each of the plurality of blades (4) is connected to an adjacent blade (4) or the central hub (6), such that each of the plurality of blades (4) forms a closed surface (12) with an adjacent blade (4) or the central hub (6). The plurality of blades (4) are located in the aperture (16) of the structure (18) of an aircraft interior. The fan structure (2) is configured to move a gas from a first side (22) of the aperture (16) to a second side (24) of the aperture (16).

## Description

### Technical Field

This disclosure relates to a fan for the interior of an aircraft. In particular, this disclosure relates to a toroidal fan mounted inside an aperture of a structure in the interior of an aircraft.

### Background

Fans may be used for a variety of different purposes in the interior of an aircraft. For example, a fan may be used as part of a heat exchanger system (e.g. as part of a chiller). A fan may also be placed close to electronics, motors or heatsinks to help move hot gas away from these components, thereby cooling them down. Fans may also be used in galley components, such as ovens, to circulate (e.g. heated) gas inside the component.

Several fans may be in use in the interior of an aircraft at any given time, many of which may be located close to where passengers are seated. This may lead to background noise that is audible to passengers on board the aircraft. As aircraft engines are becoming quieter, it is expected that these background noises may become more noticeable to passengers. It is therefore desirable to reduce the background noise in the interior of aircraft.

Furthermore, in some applications it may be beneficial to change and/or reverse the direction of the airflow. For example, in an oven reversing the direction of the airflow intermittently may help to ensure even cooking, by changing the distribution of hot and cold gas inside the oven. Therefore, it is desirable to have a fan for the interior of an aircraft that may be able to change and/or reverse the direction of the airflow.

### Summary of the Disclosure

According to a first aspect of the present disclosure, there is provided a fan structure for the interior of an aircraft, the fan structure comprising:
a structure of an aircraft interior defining an aperture;
a spindle configured to be rotatably driven about its axis by a motor;
a central hub mounted on the spindle; and
a plurality of blades extending outwardly from the central hub;
wherein a base of each of the plurality of blades is connected to the central hub;
wherein a tip of each of the plurality of blades is connected to an adjacent blade or the central hub, such that each of the plurality of blades forms a closed surface with an adjacent blade or the central hub;
wherein the plurality of blades are located in the aperture of the structure of the aircraft interior; and
wherein the fan structure is configured to move a gas from a first side of the aperture to a second side of the aperture.

The structure of the aircraft interior may be any suitable and desired type. In some examples, the structure of the aircraft interior is a part of the aircraft. For example, the structure may be an interior wall of an aircraft galley or an interior ceiling of the galley. In some examples, the structure of the aircraft interior may be a structure that is moveable out of the aircraft. For example, the structure of the aircraft interior may be part of a galley insert (e.g. an oven, a fridge, a freezer or a coffee machine). In some examples, the structure may be an internal structure of a component (e.g. a galley insert). The aperture of the aircraft interior may be any suitable and desired shape and size.

The spindle may be any suitable and desired shape. In some examples, the spindle is cylindrical (i.e. having circular cross-section in a plane perpendicular to its axis). The spindle may be rotatably driven by a motor in any suitable and desired way. For example, the spindle may be rotatably driven about its longitudinal axis. The spindle may be connected to the motor in any suitable and desired way. For example, the spindle may be connected to the output of the motor (e.g. by fixtures, an adhesive, an interference fit and/or by screwing the spindle to the output of the motor). In some examples, the spindle may itself be an output shaft of the motor.

In some examples, the spindle, the central hub and the plurality of blades are configured to be rotatably driven by the motor. The connection(s) between the spindle, the central hub and the plurality of blades may help to ensure that, when the spindle is rotatably driven by the motor, the spindle rotatably drives the central hub and the plurality of blades.

The central hub may be any suitable and desired shape. In some examples, the central hub is cylindrical (i.e. having circular cross-section in a plane perpendicular to its axis). In some examples, the spindle and the central hub are coaxial.

In some examples, the spindle and the central hub are formed separately and attached to form part of the fan structure. The spindle and the central hub may be attached in any suitable and desired way. In some examples, the central hub may be mounted onto the spindle and fixed by any suitable means (e.g. by fixtures, an adhesive, an interference fit and/or by screwing the two parts together). In some examples, the central hub comprises an aperture configured to receive an end portion of the spindle. In some examples, the spindle and the central hub are formed as a single, continuous (integral) piece of material.

The fan structure may comprise any suitable and desired number of blades. Preferably, the fan structure may comprise at least three blades, optionally at least four blades, optionally at least five blades, optionally at least six blades. In some examples, the plurality of blades may be evenly circumferentially spaced around the central hub. This may help to ensure that the fan structure is substantially rotationally symmetric (e.g. as it rotates about the axis of the spindle).

In some examples, the blades and the central hub are formed as a single, continuous (integral) piece of material. In some examples, the blades are formed separately from the central hub and are fixedly attached to the central hub. In some examples, the base of each of the plurality of blades may be mounted onto the central hub and fixed by any suitable means (e.g. by fixtures, an adhesive and/or by placing the blades into corresponding slots in the central hub).

In some examples, the plurality of blades are formed as a single, continuous (integral) piece of material. In some examples, each of the plurality of blades is formed separately. The tip of each of the plurality of blades may be connected to an adjacent blade or the central hub in any suitable and desired way.

In some examples, the plurality of blades (e.g. each) have a width that is (e.g. significantly) greater than its thickness. In some examples, the width and/or the thickness of each of the plurality of blades is not constant along the length of the blade. For example, (e.g. each of) the plurality of blades may be shaped as an aerofoil. This may help to ensure that the blades are configured to move the gas from the first side of the aperture to the second side of the aperture efficiently. This can help to reduce the energy required to operate the fan and reduce the (e.g. audible) noise produced by the fan. In some examples, the plurality of blades may (e.g. each) have a greater thickness at (e.g. each) base (i.e. proximal to the central hub). This may help to ensure that the plurality of blades are able to withstand the higher forces applied proximal to the (radial) centre of the fan.

In some examples, the closed surface of each of the plurality of blades extends from the base of the blade, along the length of the blade until it meets an adjacent blade, along the length of the adjacent blade to its base, and around the central hub until it meets the base of the first blade. In some examples, the tip of each of the plurality of blades may instead be connected to the central hub, such that each of the plurality of blades forms a closed surface with the central hub.

The gas that is moved by the fan may be any suitable and desired type. In some examples, the gas is air (i.e. a mixture of gases comprising nitrogen and oxygen). In some examples, the gas may include one or more vapours, such as water vapour and/or oil vapour.

In some examples, the spindle, the central hub and the plurality of blades are configured to rotate in a first direction to move the gas from the first side of the aperture to the second side of the aperture; and
the spindle, the central hub and the plurality of blades are configured to rotate in a second direction to move the gas from the second side of the aperture to the first side of the aperture.

Therefore, in some examples the fan structure may be operable to move the gas in either or both directions (i.e. from both the first side of the aperture to the second side of the aperture, and from the second side of the aperture to the first side of the aperture). This may be advantageous in some applications. For example, in an oven, reversing the direction of the airflow intermittently may help to ensure even cooking, by changing the distribution of hotter and colder gas inside the oven.

In some examples, the fan structure may be controlled such that the fan rotates in the first direction and the second direction in the desired manner. This may be advantageous in applications where it is desirable to maintain a particular gas speed and/or gas flow volume and/or temperature through at least a portion of the structure. For example, it may be desirable to maintain a substantially equal gas speed and/or gas flow volume and/or temperature on both the first side and the second side of the aperture. This may be achieved through controlling the direction of the gas flow by rotating the fan in the desired direction.

In some examples, the first direction and the second direction may be opposite directions. In some examples, the first direction may be clockwise about the spindle and the second direction may be anticlockwise about the spindle. In some examples, the first direction may be anticlockwise about the spindle and the second direction may be clockwise about the spindle.

In some examples, the fan may be symmetric when viewed from the first side of the aperture and the second side of the aperture. Therefore, the fan may be configured to move the gas in the same manner from both the first side of the aperture to the second side of the aperture, and from the second side of the aperture to the first side of the aperture. This may help to ensure that the gas can be moved in a similar manner whether the fan is rotating in the first direction or the second direction. For example, the fan may be configured to rotate in either direction without changing the direction of travel of the gas (e.g. such that the gas travels in a direction parallel to the axis of the spindle and/or the axis of the central hub).

The fan may be configured to change rotation by any suitable and desired means. In some examples, the fan may be configured to change its direction of rotation at regular time intervals (e.g. once every minute). In some examples, the fan may be configured to change its direction of rotation in response to a condition (e.g. a measurement of one or more of gas speed, gas flow volume, temperature, and/or noise levels). In some examples, the fan may be configured to change its direction of rotation in response to a command (e.g. as an input from a user).

In some examples, the base of (e.g. each of) the plurality of blades is connected to the central hub at a first angle to the axis of the spindle.

In some examples, the tip of (e.g. each of) the plurality of blades is connected to an adjacent blade or the central hub at a second angle to the axis of the spindle.

The first angle and the second angle may be any suitable and desired value(s). In some examples, the first angle and/or the second angle may be more than 10 degrees, optionally more than 20 degrees, optionally more than 30 degrees, optionally more than 40 degrees, optionally more than 50 degrees, optionally more than 60 degrees, optionally more than 70 degrees, optionally more than 80 degrees.

In some examples, the base and/or the tip of (e.g. each of) the plurality of blades being connected at an angle to the axis of the spindle may help to ensure that the gas flows smoothly around the blades (i.e. that vortices produced in the gas by the fan are substantially reduced). This may help to ensure that the (e.g. audible) noise produced by the fan is substantially reduced.

In some examples, the first angle and/or the second angle may be chosen such that the plurality of blades are configured as aerofoil. This may help to ensure that the blades are configured to move the gas from the first side of the aperture to the second side of the aperture efficiently. This can help to reduce the energy required to operate the fan and reduce the (e.g. audible) noise produced by the fan.

In some examples, the first angle is different to the second angle. This may result in (e.g. each of) the plurality of blades twisting between the base and the tip (as the face of (e.g. each of) the plurality of blades changes direction along its length). The difference between the first angle and the second angle may change the extent to which the plurality of blades twists. For example, a large difference between the first angle and the second angle may result in a greater degree of twist than a smaller difference between the first angle and the second angle. Twists in the blades may help to reduce the magnitude of vortices that are produced in the gas by the blades as they rotate, thereby reducing the (e.g. audible) noise produced by the fan.

In some examples, the spindle is mounted in a bearing and/or connected to a motor;
wherein the bearing or the motor is fixedly connected to the structure by a plurality of spokes; and
wherein optionally a first end of (e.g. each of) the spokes is connected to the bearing or the motor and a second end of (e.g. each of) the spokes is connected to a perimeter of the aperture.

The bearing may be any suitable and desired type. In some examples, the bearing comprises an aperture configured to receive a portion of the spindle, such that the spindle may rotate inside the aperture. The bearing may be configured to support the spindle (e.g. as it rotates). This may help to ensure that the spindle remains in its intended position relative to the other components of the fan structure. This may also help to prevent the spindle from deforming (e.g. from the weight of the central hub and the plurality of blades, or from the forces exerted on it as a result of its rotation).

The fan structure may include any suitable and desired number of spokes. In some examples, the fan structure may include three, four, five or six spokes. In some examples, the spokes are evenly angularly distributed around the bearing or the motor (e.g. around the axis of the spindle) and/or around the perimeter of the aperture. This may help to ensure that any stress and/or strain is exerted evenly around the bearing or the motor and/or around the perimeter of the aperture.

In examples where the spindle is mounted in a bearing and connected to a motor, the fan structure may comprise a first set of spokes configured to connect the bearing to the structure and a second set of spokes configured to connect the motor to the structure.

The spokes may be any suitable and desired shape. In some examples, the spokes are elongate structures, (e.g. each) having a length that is (e.g. significantly) greater than their width and depth. This may help to reduce the disruption to the gas flowing through the aperture of the structure that is caused by the spokes, by reducing the volume and/or the cross-sectional area of the spokes.

The spokes may be configured to support the bearing or the motor. This may help to ensure that the bearing and/or the motor remain in their intended position relative to the other components of the fan structure. In some examples, the bearing and/or the motor should remain substantially stationary relative to the structure of the aircraft (e.g. excluding small deviations such as vibrations).

In some examples, the bearing and/or the motor may be located at least partly inside the central hub. This may help to keep the fan more compact in applications where space is limited.

In some examples, the aperture is located in a substantially planar surface of the structure; and
wherein the axis of spindle is substantially perpendicular to the substantially planar surface.

In some examples, the first side of the aperture extends outwardly from a first face of the substantially planar surface; and
wherein the second side of the aperture extends outwardly from a second, opposing face of the substantially planar surface.

The substantially planar surface may have any suitable dimensions. In some examples, the substantially planar surface forms part of a structure that comprises non-planar portions. In some examples, the entire structure is substantially planar.

The substantially planar surface may form a part of any structure of an aircraft. In some examples, the substantially planar surface may be a wall, for example a wall dividing two parts of a structure.

When the axis of spindle is substantially perpendicular to the substantially planar surface, the fan may be configured to move the gas from a first side of the aperture to a second side of the aperture in a direction that is substantially parallel to the axis of the spindle. The fan may be configured to move the gas from a second side of the aperture to a first side of the aperture in a direction that is substantially parallel to the axis of the spindle.

In some examples, the aperture is defined as the aperture in a tubular portion of the structure; and
wherein the axis of spindle is substantially coaxial with the axis of the tubular portion.

In some examples, the first side of the aperture is a first axial region of the tubular portion; and
wherein the second side of the aperture is a second axial region of the tubular portion.

The tubular portion may have any suitable and desired shape. For example, the tubular portion may have any cross-sectional shape (in a plane that is perpendicular to the axis of the tubular portion). For example, the tubular portion may have a circular, triangular, square, rectangular, pentagonal, hexagonal or octagonal cross-sectional shape. The axis of the tubular portion may extend through the centre of the aperture.

The tubular portion may form a part of any structure of an aircraft. In some examples, the tubular portion may be an air duct, for example an air duct in an air conditioning system of an aircraft.

When the axis of spindle is substantially coaxial with the axis of the tubular portion, the fan may be configured to move the gas from a first side of the aperture to a second side of the aperture in a direction that is substantially parallel to the axis of the spindle. The fan may be configured to move the gas from a second side of the aperture to a first side of the aperture in a direction that is substantially parallel to the axis of the spindle.

In some examples, the first axial region of the tubular portion extends outwardly from a first face of the central hub and the second axial region of the tubular portion extends outwardly from a second face of the central hub. Therefore, the first axial region of the tubular portion extends outwardly from a first side of the plurality of blades and the second axial region of the tubular portion extends outwardly from a second side of the plurality of blades.

In some examples, the fan structure is configured to move the gas from the first side of the aperture to the second side of the aperture without substantially changing the direction of travel of the gas that is being moved;
wherein optionally the direction of travel of the gas that is being moved is substantially parallel to the axis of the spindle.

In some examples, the fan structure may be configured such that the gas flows substantially parallel to the axis of the spindle on both the first side of the aperture and the second side of the structure. That is, the operation of the fan on the gas has a negligible effect on the direction of the gas flow. This may be advantageous in some applications where the fan is being used to move the gas from one region to another (i.e. from the first side of the aperture to the second side of the aperture) but it is desirable to not disrupt the gas flow. For example, if the gas is travelling through a duct (e.g. in order to be filtered and/or to be moved from a first part of the aircraft to a second part of the aircraft), it is desirable that the gas continues to flow in the same direction as it moves through the duct. Furthermore, this may help to reduce the (e.g. audible) noise produced by the gas moving through the fan, by keeping turbulent flow to a minimum.

In some examples, the fan structure comprises a deflection surface;
wherein the width of the deflection surface increases from a first width at a first end of the deflection surface to a second width at the second end of the deflection surface;
wherein the first end of the deflection surface is proximal to the central hub.

The width of the first end of the deflection surface and the width of the second end of the deflection surface may be any suitable and desired values. The deflection surface may increase from the first width to the second width in any suitable and desired manner.

In some examples, the deflection surface is curved.

The deflection surface may have any suitable and desired shape. For example, the deflection surface may be exponential, parabolic, elliptical, a catenoid, and/or a section of a ring torus. In some examples, only a portion of the deflection surface is curved (e.g. the deflection surface may comprise some planar portions). In some examples, the deflection surface may have a pyramidal shape. The base of the pyramid may be any suitable and desired shape.

In some examples, the deflection surface is a surface of revolution of a straight line or a curved line about its axis. Therefore, in some examples the deflection surface is symmetric about its axis. In some examples, the deflection surface may be coaxial with the spindle. This may help to ensure that the gas is deflected in a similar manner around the entire aperture. This may help to ensure that the gas flow is rotationally symmetric (e.g. about the axis of the deflection surface).

In some examples, the deflection surface is configured to change the direction of travel of the gas that is being moved from the first side of the aperture to the second side of the aperture;
wherein optionally the deflection surface is configured to change the direction of travel of the gas that is being moved from the first side of the aperture to the second side of the aperture from substantially parallel to the axis of the spindle to substantially perpendicular to the axis of the spindle;
wherein further optionally, the deflection surface is configured to change the direction of travel of the gas that is being moved from the second side of the aperture to the first side of the aperture from substantially perpendicular to the axis of the spindle to substantially parallel to the axis of the spindle.

The deflection surface may be configured to change the direction of travel of the gas that is flowing through the fan by deflecting the gas from its surface. When the gas comes into contact with the deflection surface, the direction of travel of the gas is changed such that the gas travels away from the deflection surface in a different direction.

In some examples, the direction of rotation of the fan (e.g. the plurality of blades, the central hub, the spindle and/or the deflection surface) may be alternated (e.g. in the manner discussed above) in order to reverse the direction of the gas flow through the fan structure.

In some examples, the spindle is located (e.g. substantially) inside the deflection surface. In some examples, the spindle and the deflection surface are coaxial. The central hub may be mounted on the spindle and the spindle may be configured to be rotatably driven about its axis by a motor. Therefore, a portion of the spindle may extend axially beyond the deflection surface, to facilitate mounting of the central hub onto the spindle.

In some examples, a first end of deflection surface is proximal to the central hub (e.g. the first end of the deflection surface is located at approximately the same axial position on the spindle at which the central hub is mounted on the spindle). In some examples, the deflection surface may extend along substantially the entire length of the spindle. In some examples, the deflection surface may have a different length to the spindle (e.g. in order to facilitate mounting of the central hub onto the spindle and/or to facilitate the spindle being connected to a motor).

In some examples, the deflection surface may remain stationary while the spindle is rotatably driven about its axis. Therefore, the deflection surface may be fixedly mounted (e.g. by spindles) to a structure of the aircraft or to another component of the aircraft.

In some examples, the deflection surface may comprise the outer surface of the spindle (i.e. the spindle may include an outer surface that is configured to deflect gas). In these examples, the deflection surface may operate as (and comprise) part of the spindle. For example, the deflection surface may be configured to be rotatably driven about its axis by a motor and/or the central hub may be mounted on the deflection surface.

The shape of the deflection surface may be adapted such that the spindle changes the direction of travel of the gas in the desired manner. For example, the shape of the deflection surface may determine the angle through which the gas changes direction. The shape of the deflection surface may also determine whether the change in direction of the gas flow is symmetrical or asymmetrical.

In some examples, a curved, rotationally symmetric deflection surface may be used to change the direction of travel of the gas that is being moved from the first side of the aperture to the second side of the aperture from substantially parallel to the axis of the spindle to substantially perpendicular to the axis of the spindle.

In some examples, the structure is inside an apparatus of an aircraft;
wherein the first surface of the structure and the second surface of the structure are inside the apparatus; and
wherein the fan is configured to move the gas within the apparatus.

The fan may be configured to move gas within the (e.g. closed) interior volume of the apparatus. In some examples, the fan may be configured to help develop gas convection currents within the apparatus. This may help to ensure that heat is distributed as desired within the apparatus. In some examples, this may involve the heat being evenly distributed throughout the interior volume of the apparatus.

In some examples, the apparatus may include: an oven, a fridge, a freezer and/or a chiller of an aircraft interior. In some examples, the apparatus may include a heat exchanger.

In some examples, the structure is an external surface of an apparatus of an aircraft;
wherein the first surface of the structure is inside the apparatus;
wherein the second surface of the structure is outside the apparatus; and
wherein the fan is configured to move the gas from inside the apparatus to outside the apparatus and/or the fan is configured to move from outside the apparatus into the apparatus.

The fan may be configured to help bring gas into the apparatus. This may be advantageous in examples where cool gas needs to be brought into the apparatus (e.g. to help cool a component of the apparatus) and/or when gas needs to be replaced within the apparatus (e.g. in an air conditioner unit where a supply of fresh air (e.g. air having a lower humidity) is required).

The fan may be configured to help move gas out of the apparatus. This may be advantageous in examples where hot gas needs to be expelled from the apparatus (e.g. to help cool a component of the apparatus) and/or when gas needs to be replaced within the apparatus (e.g. to replace the air within a cabin of an aircraft with fresh air).

In some examples, the fan structure is mounted inside an oven of an aircraft; and
wherein the fan structure is configured to move the gas from the first side of the aperture to the second side of the aperture inside the oven.

In some examples, the fan structure may be configured to pass the gas over a heating element of an oven such that the gas is heated by the heating element. This may help to ensure that a greater proportion of the gas to be heated passes over the heating element, thereby increasing the temperature of the gas inside the oven.

In some examples, the fan structure may be configured to carry (e.g. heated) gas away from the heating element (e.g. once it has passed over the heating element). This may help to ensure that hot gas is circulated around the oven.

In some examples, the spindle, the central hub and the plurality of blades are configured to rotate in a first direction to move the gas from the first side of the aperture to the second side of the aperture inside the oven; and
the spindle, the central hub and the plurality of blades are configured to rotate in a second direction to move the gas from the second side of the aperture to the first side of the aperture inside the oven.

In some examples, the direction of rotation of the fan may be alternated (e.g. periodically) in order to reverse the direction of the gas flow inside the oven. In some examples, this may help to ensure that the path of the hotter gas (e.g. the gas that has just passed over the heating element) is changed (e.g. periodically). This may help to ensure that the distribution of heat inside the oven is more uniform, by ensuring that the hotter gas travels to different parts of the oven as required. This may help to ensure that food is evenly cooked throughout the oven and/or that the time required to cook food is reduced.

In some examples, the fan structure is mounted inside a chiller of an aircraft; and
the fan structure is configured to move the gas from the first side of the aperture to the second side of the aperture inside the chiller.

In some examples, the fan structure may be configured to pass the gas over a cooling element (e.g. a heat exchanger) of a chiller such that the gas is cooled by the cooling element. This may help to ensure that a greater proportion of the gas to be cooled passes over the cooling element, thereby decreasing the temperature of the gas inside the chiller.

In some examples, the fan structure may be configured to carry (e.g. cooled) gas away from the cooling element (e.g. once it has passed over the cooling element). This may help to ensure that cold gas is circulated around the chiller.

In some examples, the spindle, the central hub and the plurality of blades are configured to rotate in a first direction to move the gas from the first side of the aperture to the second side of the aperture inside the chiller; and
the spindle, the central hub and the plurality of blades are configured to rotate in a second direction to move the gas from the second side of the aperture to the first side of the aperture inside the chiller.

In some examples, the direction of rotation of the fan may be alternated (e.g. periodically) in order to reverse the direction of the gas flow inside the chiller. In some examples, this may help to ensure that the path of the colder gas (e.g. the gas that has just passed over the cooling element) is changed (e.g. periodically). This may help to ensure that the distribution of heat inside the chiller is more uniform, by ensuring that the colder gas travels to different parts of the chiller as required. This may help to ensure that objects inside the chiller are all cooled to the same temperature and/or that the time required to cool objects inside the chiller is reduced.

In some examples, the fan structure is configured to move the gas from the first side of the aperture to the second side of the aperture in a heat exchanger of an aircraft.

In some examples, the heat exchanger may be used in a chiller of an aircraft. For example, the heat exchanger may form part of a galley component such as a fridge or a freezer. The fan structure may help to ensure that hot gas is carried away from the heat exchanger and/or that cool gas is supplied to the heat exchanger.

In some examples, the fan structure may be used to dissipate heat from an object. For example, the fan structure may be used to cool electronics, a motor, and/or a heatsink. In some examples, the fan structure may be located proximal to the object to be cooled, and configured to ensure that hot gas is carried away from the region proximal to the object and/or that cool gas is supplied to the region proximal to the object.

### Brief Description of the Drawings

Certain examples of the present disclosure will now be described with reference to the accompanying drawings in which:
Figure 1 is a front view of a fan of the present disclosure;
Figure 2 is a side view of a fan of the present disclosure;
Figure 3 is a side view of a fan of the present disclosure;
Figures 4a-c are views of a set of blades and a deflection surface for a fan of the present disclosure;
Figure 5 is a side view of a set of blades and a deflection surface for a fan of the present disclosure;
Figures 6 and 7 are cross-sectional views of an oven including a fan of the present disclosure; and
Figures 8a-c show sets of blades for a fan of the present disclosure.

### Detailed Description

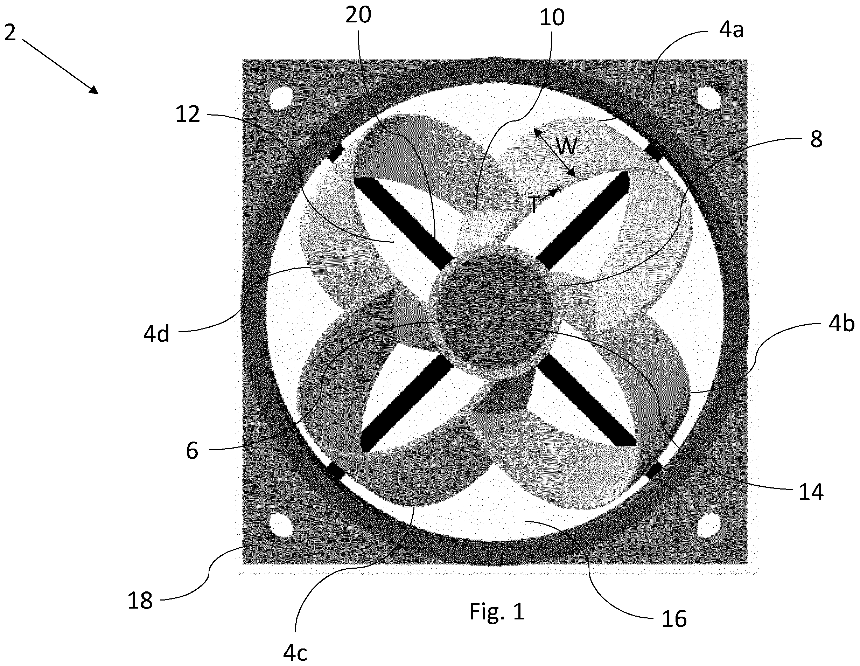

Figure 1 is a front view of a fan 2 of the present disclosure. The fan 2 includes multiple blades 4a-d. For clarity, in the discussion of the blades 4a-d below, each feature is only labelled on one of the four blades 4a-d. However, it will be understood that the features may apply equally to each of the blades 4a-d.

In this example, the blades 4a-d each have a width W that is much greater than its thickness T. The width W and/or the thickness T of the blades 4a-d need not be constant along the length of the blade 4a-d. For example, the blades 4a-d may be shaped as an aerofoil. In some examples, the blades 4a-d may have a greater thickness at (e.g. each) base 8 (i.e. proximal to the central hub 6). This may help to ensure that the blades 4a-d are able to withstand the higher forces applied proximal to the centre of the fan 2.

The blades 4a-d each extend outwardly from a central hub 6. A base 8 of each of the blades 4a-d is connected to the central hub 6. In some examples, the blades 4a-d and the central hub 6 are formed as a single, continuous piece of material. In some examples, the blades 4a-d are formed separately from the central hub 6, and are fixedly attached to the central hub 6 as a separate step in the manufacturing process.

The tip 10 of each of the blades 4a-d is connected to an adjacent blade, such that each of the blades 4a-d forms a closed surface 12 with an adjacent blade 4a-d. For example, the closed surface 12 of the blade 4a extends from the base 8 of the blade 4a, along the length of the blade 4a until it meets an adjacent blade 4b, along the length of the blade 4b to its base 8, and around the central hub 6 until it meets the base of the blade 4a.

In some examples, the tip 10 of each of the plurality of blades 4a-d may instead be connected to the central hub 6, such that each of the plurality of blades 4a-d forms a closed surface 12 with the central hub 6.

The central hub 6 is mounted on the spindle 14. The central hub 6 is configured to rotate about the axis of the spindle 14 (e.g. as the spindle 14 is drivingly rotated about its axis by a motor). In some examples, the central hub 6 is configured for rotation in both directions (i.e. clockwise and anticlockwise).

The blades 4a-d are located in an aperture 16 of a structure 18 of an aircraft. The aperture 16 may be any suitable and desired shape and size. In some examples, the blades 4a-d may extend beyond the aperture 16 in a forward and/or a rearward direction, but they are contained within the aperture 16 at their radial extent. For example, the structure 18 may be a thin piece of material (e.g. sheet metal), such that the blades 4a-c and the central hub 6 have a greater extent along the axis of the spindle 14.

In this example, the structure 18 is a substantially planar surface, which may extend beyond the portion that is shown in Figure 1. In this example, the axis of the spindle 14 is substantially perpendicular to the substantially planar surface of the structure 18.

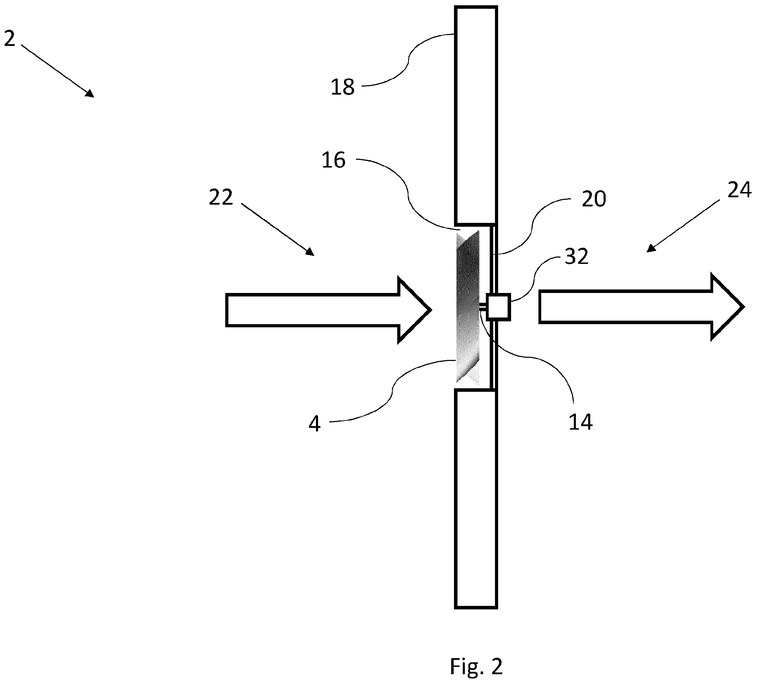

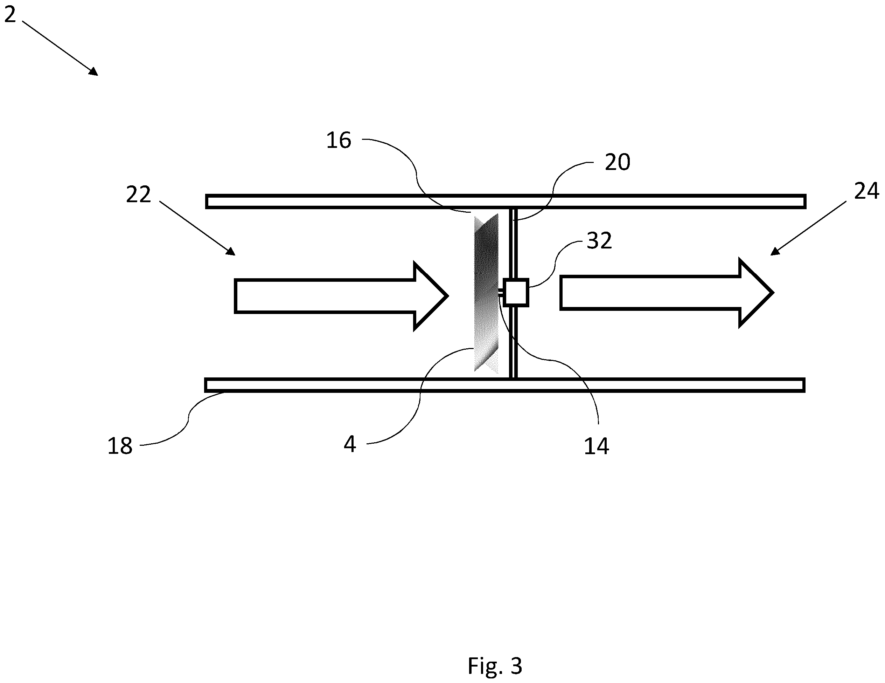

In this example, the spindle 14 is connected to a support structure 32 (not shown, but can be seen in Figures 2 and 3). In some examples, the support structure 32 may be a bearing and in some examples, the support structure 32 may be a motor. In Figures 2 and 3, the support structure 32 is shown as axially separated from the blades 4a-d and the central hub 6. However, in some examples, the support structure 32 may be located at least partly inside the central hub 6.

The support structure 32 is connected to the edge of the aperture 16 by spokes 20 (only one of the spokes 20 is labelled for clarity). The spokes 20 may have any suitable and desired shape. In this example, the spokes 20 extend radially outwards from the support structure 32 to the edge of the aperture 16. However, it will be understood that the spokes 20 may be arranged in any manner and that any suitable and desired number of spokes 20 may be used. The spokes 20 are configured to provide support to the support structure 32 and to hold the support structure 32 in the desired position (e.g. relative to the structure of the aircraft 18).

Figure 2 is a side view of a fan 2 of the present disclosure. From this view, the blades 4, the spindle 14, the spokes 20, the support structure 32 and the structure 18 comprising an aperture 16 can be seen. In this example, the axis of the spindle 14 is substantially perpendicular to the plane of the structure 18. In this example, the spokes 20 are substantially parallel to the plane of the structure 18.

The fan 2 is configured to move a gas from a first region 22 (e.g. of the structure 18) to a second region 24 (e.g. of the structure 18) and/or from a second region 24 (e.g. of the structure 18) to a first region 22 (e.g. of the structure 18). In some examples, the direction that the blades 4 spin may be reversed (e.g. intermittently), in order to reverse the direction of the gas flow.

The arrows show the direction of the gas flow from the first region 22 to the second region 24. In this example, the gas flows in a direction that is substantially perpendicular to the plane of the structure 18. The operation of the fan 2 does not substantially change the direction of the gas flow (i.e. the gas travels in a direction that is substantially perpendicular to the plane of the structure 18 in the first region 22 and in the second region 24).

It will be understood that the fan 2 may be configured to operate in a similar manner when the blades 4 are rotating in the opposite direction (i.e. that operation of the fan 2 does not substantially change the direction of the gas flow).

Figure 3 is a side view of a fan 2 of the present disclosure. In this example, the aperture 16 is located in a tubular portion of the structure 18. In this example, the first region 22 of the structure 18 is a first axial region of the tubular portion and the second region 24 of the structure 18 is a second axial region of the tubular portion. In this example, the first region 22 and the second region 24 are separated by the blades 4, the spindle 14, the support structure 32 and the spokes 20. In this example, the spindle 14 is substantially coaxial with the axis of the tubular portion of the structure 18.

The arrows of Figure 3 show the direction that the gas flows in the first region 22 and the second region 24. The fan 2 of this example may be configured to operate in a similar manner to that of Figure 2, in that the operation of the fan 2 does not substantially change the direction of the gas flow. Furthermore, it will be understood that the fan 2 may be configured to operate in a similar manner when the blades 4 are rotating in the opposite direction (i.e. that operation of the fan 2 does not substantially change the direction of the gas flow). In some examples, the direction that the blades 4 spin may be reversed (e.g. intermittently), in order to reverse the direction of the gas flow.

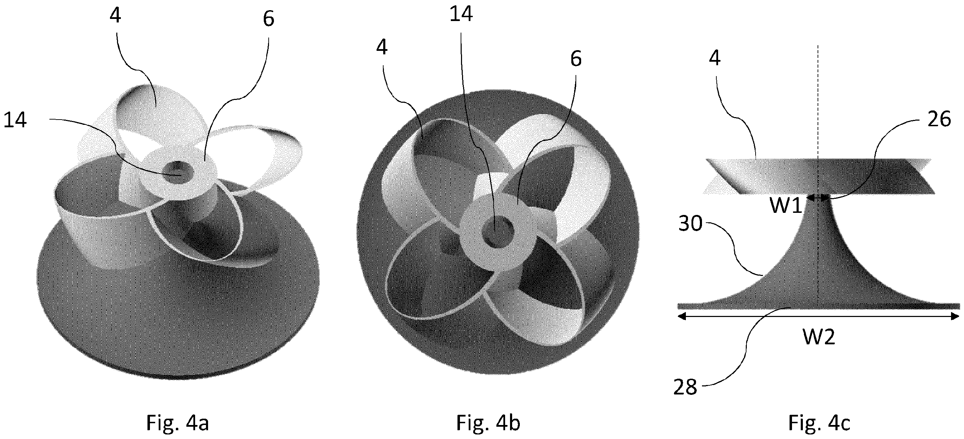

Figures 4a-c are perspective, front and side views of a set of blades 4 and a deflection surface 30 for a fan 2 of the present disclosure. Figures 4a-c show the same set of blades 4 and the deflection surface 30 from different views.

In this example, the deflection surface 30 is configured to change the direction of travel of the gas that is flowing through the fan by deflecting the gas from its surface. When the gas comes into contact with the deflection surface 30, the direction of travel of the gas is changed such that the gas travels away from the deflection surface 30 in a different direction.

In this example, the spindle 14 is located (e.g. substantially) inside the deflection surface 30. In this example, the spindle 14 and the deflection surface 30 are coaxial (shown as a dashed line on Figure 4c). The central hub 6 is mounted on the spindle 14 (e.g. in the same manner as discussed in relation to Figures 1-3) and the spindle 14 is configured to be rotatably driven about its axis by a motor. Therefore, in this example a portion of the spindle 14 may extend axially beyond the deflection surface 30, to facilitate mounting of the central hub 6 onto the spindle 14.

The first end 26 of deflection surface 30 is proximal to the central hub 6 (e.g. the first end 26 of the deflection surface 30 is located at approximately the same axial position on the spindle 14 at which the central hub 6 is mounted on the spindle 14). In some examples, the deflection surface 30 may extend along substantially the entire length of the spindle 14. In some examples, the deflection surface 30 may have a different length to the spindle 14 (e.g. in order to facilitate mounting of the central hub 6 onto the spindle 14 and/or to facilitate the spindle 14 being connected to a motor).

In this example, the deflection surface 30 may remain stationary while the spindle 14 is rotatably driven about its axis. Therefore, the deflection surface 30 may be fixedly mounted (e.g. by spokes) to the structure of the aircraft or to another component of the aircraft.

In some examples, the deflection surface 30 can be the outer surface of the spindle 14 (i.e. the spindle 14 may include an outer surface that is configured to deflect gas). In these examples, the deflection surface 30 operates as part of the spindle.

For example, the deflection surface 30 may be configured to be rotatably driven about its axis by a motor and/or the central hub 6 may be mounted on the deflection surface 30.

In this example, the width of the deflection surface 30 increases from a first width W1 at a first end 26 of the deflection surface 30 to a second width W2 at the second end 28 of the deflection surface 30. The central hub 6 is mounted on the first end 26 of the spindle 14 (e.g. in the same manner as the example in Figures 1 and 2).

In this example, the deflection surface 30 is curved. Furthermore, in this example, the deflection surface 30 is a surface of revolution of a curved line about the axis of the spindle 14 (shown as a dashed line on Figure 4c). It will be understood that the shape of the deflection surface 30 may be any suitable and desired shape (e.g. such that the deflection surface 30 is configured to deflect the gas and/or change the direction of travel of the gas). For example, the deflection surface 30 may be straight and/or flat, or have straight or and/flat portions.

Furthermore, first end 26 and the second end 28 of the deflection surface 30 may be any suitable and desired shape and/or size. In some examples, the shape of the first end 26 may be different from the shape of the second end 28.

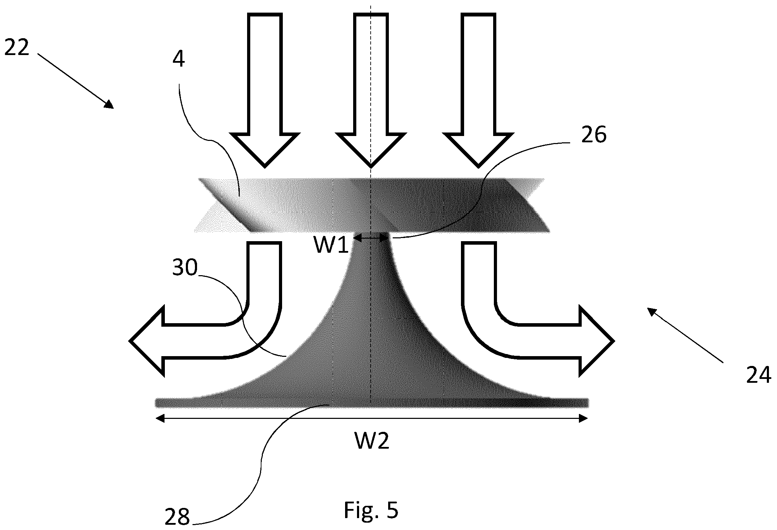

Figure 5 is a side view of a set of blades 4 and a deflection surface 30 for a fan 2 of the present disclosure. The set of blades 4 and deflection surface 30 of Figure 5 is the same as that of Figures 4a-c. In this example, the arrows around the set of blades 4 and the deflection surface 30 show the direction of the gas flow during operation of the fan 2. In the first region 22, the gas flow is substantially parallel to the axis of the spindle 14. In the second region 24, the gas flow is substantially perpendicular to the axis of the spindle 14.

In this example, the deflection surface 30 is configured to change the direction of travel of the gas that is being moved. In this example, the deflection surface 30 is configured to change the direction of travel of the gas that is being moved from substantially parallel to the axis of the spindle 14 to substantially perpendicular to the axis of the spindle 14. As the gas comes into contact with the deflection surface 30, the gas is deflected such that the direction of travel of the gas is altered.

Furthermore, if the blades 4 are operated in the opposite direction, the direction of the gas flow can be reversed, such that the deflection surface 30 is configured to change the direction of travel of the gas that is being moved from substantially perpendicular to the axis of the spindle 14 to substantially parallel to the axis of the spindle 14.

It will be understood that the shape of the deflection surface 30 may be varied to achieve a desired change in the direction of the gas flow.

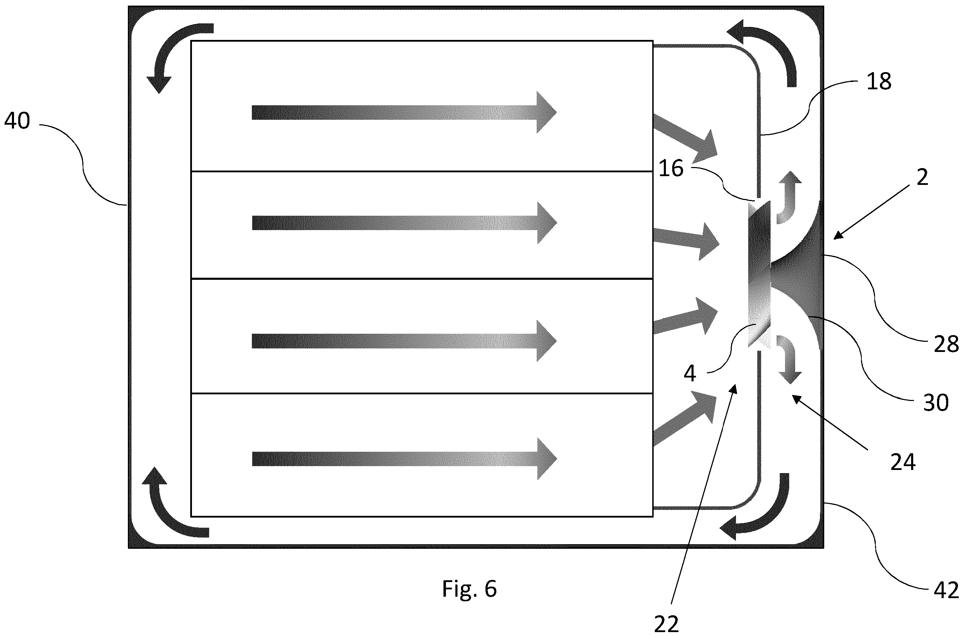

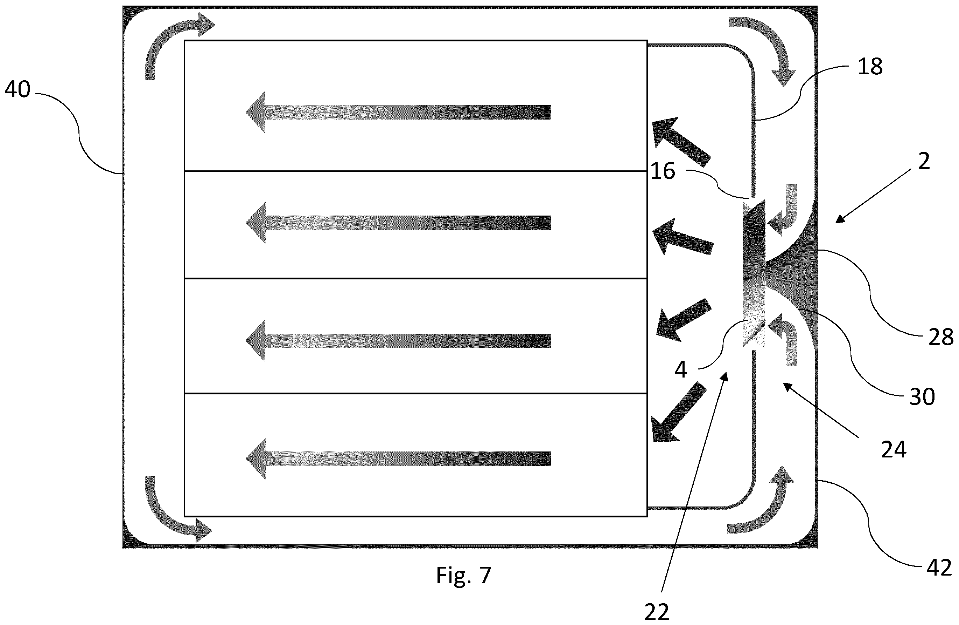

Figures 6 and 7 are cross-sectional views of an oven including a fan 2 of the present disclosure. In these examples, the deflection surface 30 is similar to the examples shown in Figures 4a-c and 5.

In this example, the blades 4 are located in an aperture 16 of a substantially planar surface 18 of the oven 40. The second end 28 of the deflection surface 30 is mounted on the interior of a back surface 42 of the oven 40. In this example, the first region 22 of the structure extends outwardly from a first face of the substantially planar surface 18 and the second region 24 of the structure extends outwardly from a second, opposing face of the substantially planar surface 18.

The oven 40 may comprise a heating element (not shown), arranged to heat the gas being circulated in the oven. The heating element may, for example, be located in the first region 22 or the second region 24 of the structure. As the gas is circulated by the blades 4 of the fan 2, the gas may be drawn past the heating element, heating the gas.

The arrows show the direction of the gas flow throughout the interior of the oven 40. In Figure 6, the gas flows in a substantially axial direction towards the blades 4 in the first region 22 of the oven 40. The deflection surface 30 is configured to change the direction of the gas flow, such that in the second region 24 the gas is configured to flow in a direction that is substantially parallel to the substantially planar surface 18.

Figure 7 shows the same apparatus as Figure 6, but with the blades 4 being rotated in the opposite direction. In this example, the gas flows towards the blades 4 in the second region 24, in a direction that is substantially parallel to the substantially planar surface 18. The deflection surface 30 is configured to change the direction of the gas flow, such that in the first region 22 of the oven, the gas flows in a substantially axial direction away from the blades 4. Therefore, reversing the direction of rotation of the blades 4 also reverses the direction of the gas flow. This may be advantageous in an oven 40 of an aircraft because it helps to ensure that heat is evenly distributed around the interior of the oven 40 (e.g. around the meals located inside the oven 40).

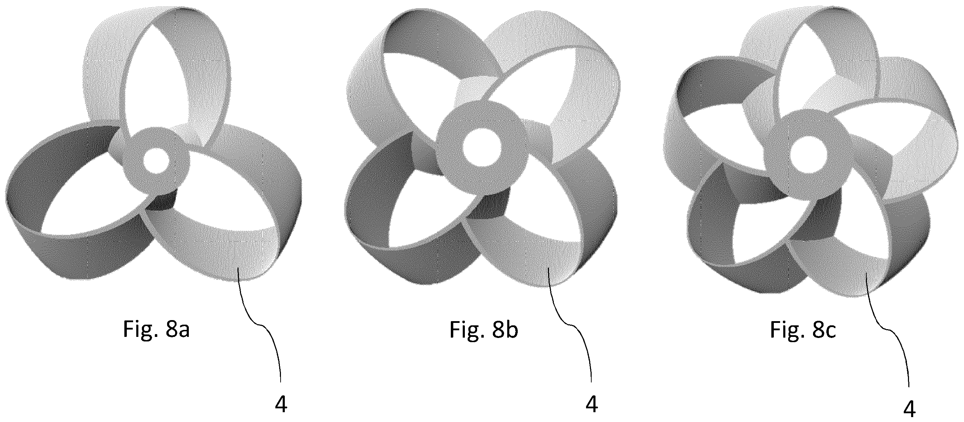

Figures 8a-c are perspective views of sets of blades 4 for a fan 2 of the present disclosure. Any of the fans of Figures 8a-c may be used in any of the foregoing examples of the fan 2.

Figure 8a is an example of a fan 2 with three blades 4, Figure 8b is an example of a fan 2 with four blades 4, and Figure 8c is an example of a fan 2 with five blades 4. It will be understood that a fan 2 of the present disclosure may have any suitable and desired number of blades 4.

Furthermore, any number of features of the blades 4 may be varied according to the desired operation of the fan 2. For example, any and/or all of the following features may be varied: the length, width, and/or thickness of the blades 4; the angle at which the base 8 of the blades 4 extends from the central hub 6; the angle at which the tip 10 of a blade 4 meets the adjacent blade 4; the degree to which the blades 4 twists between the base 8 and the tip 10; and/or the material that the blades 4 are formed from.

In some examples, the closed surface of each of the plurality of blades may help to reduce the magnitude of the vortices that are produced by the blades moving through the gas. As the tip of each of the blades curves inwardly to connect to the adjacent blade of the central hub, the edge of the blade is curved and therefore produces a lower level of turbulent flow in the gas as it moves. This may help to reduce the noise produced by the fan structure. As the fan structure is used in the interior of an aircraft, this may help to reduce the ambient noise in the cabin of the aircraft, thereby improving passenger experience.

In some examples, the closed surface of each of the plurality of blades may help to reduce the noise that is produced by the blades moving through the gas within a specific range of frequencies. For example, the plurality of blades may be configured such that frequencies within the audible range are reduced (e.g. between approximately 20 Hz and 20 kHz). In some examples, the plurality of blades may be configured such that the frequency response of the fan structure is shifted away from the range of audible frequencies (e.g. between approximately 20 Hz and 20 kHz). This may help to reduce the audible noise produced by the fan structure. As the fan structure is used in the interior of an aircraft, this may help to reduce the noise in the cabin of the aircraft that can be heard by passengers, thereby improving passenger experience.

## Claims

1. A fan structure for the interior of an aircraft, the fan structure comprising:
a structure of an aircraft interior defining an aperture;
a spindle configured to be rotatably driven about its axis by a motor;
a central hub mounted on the spindle; and
a plurality of blades extending outwardly from the central hub;
wherein a base of each of the plurality of blades is connected to the central hub;
wherein a tip of each of the plurality of blades is connected to an adjacent blade or the central hub, such that each of the plurality of blades forms a closed surface with an adjacent blade or the central hub;
wherein the plurality of blades are located in the aperture of the structure of the aircraft interior; and
wherein the fan structure is configured to move a gas from a first side of the aperture to a second side of the aperture.

2. A fan structure as claimed in claim 1, wherein the spindle, the central hub and the plurality of blades are configured to rotate in a first direction to move the gas from the first side of the aperture to the second side of the aperture; and
the spindle, the central hub and the plurality of blades are configured to rotate in a second direction to move the gas from the second side of the aperture to the first side of the aperture.

3. A fan structure as claimed in claim 1 or 2, wherein the base of each of the plurality of blades is connected to the central hub at a first angle to the axis of the spindle.

4. A fan structure as claimed in claim 1, 2 or 3, wherein the tip of each of the plurality of blades is connected to an adjacent blade or the central hub at a second angle to the axis of the spindle.

5. A fan structure as claimed in any preceding claim, wherein the spindle is mounted in a bearing and/or connected to a motor;
wherein the bearing or the motor is fixedly connected to the structure by a plurality of spokes;
wherein optionally a first end of each of the spokes is connected to the bearing or the motor and a second end of each of the spokes is connected to a perimeter of the aperture.

6. A fan structure as claimed in any preceding claim, wherein the aperture is located in a substantially planar surface of the structure; and
wherein the axis of spindle is substantially perpendicular to the substantially planar surface.

7. A fan structure as claimed in claim 6, wherein the first side of the aperture extends outwardly from a first face of the substantially planar surface; and
wherein the second side of the aperture extends outwardly from a second, opposing face of the substantially planar surface.

8. A fan structure as claimed in any of claims 1 to 5, wherein the aperture is defined as the aperture in a tubular portion of the structure; and
wherein the axis of spindle is substantially coaxial with the axis of the tubular portion.

9. A fan structure as claimed in claim 8, wherein the first side of the aperture is a first axial region of the tubular portion; and
wherein the second side of the aperture is a second axial region of the tubular portion.

10. A fan structure as claimed in any preceding claim, wherein the fan structure is configured to move the gas from the first side of the aperture to the second side of the aperture without substantially changing the direction of travel of the gas that is being moved;
wherein optionally the direction of travel of the gas that is being moved is substantially parallel to the axis of the spindle.

11. A fan structure as claimed in any of claims 1-9, wherein the fan structure comprises a deflection surface;
wherein the width of the deflection surface increases from a first width at a first end of the deflection surface to a second width at the second end of the deflection surface;
wherein the first end of the deflection surface is proximal to the central hub.

12. A fan structure as claimed in claim 11, wherein the deflection surface is curved.

13. A fan structure as claimed in claim 11 or 12, wherein the deflection surface is configured to change the direction of travel of the gas that is being moved from the first side of the aperture to the second side of the aperture;
wherein optionally the deflection surface is configured to change the direction of travel of the gas that is being moved from the first side of the aperture to the second side of the aperture from substantially parallel to the axis of the spindle to substantially perpendicular to the axis of the spindle;
wherein further optionally, the deflection surface is configured to change the direction of travel of the gas that is being moved from the second side of the aperture to the first side of the aperture from substantially perpendicular to the axis of the spindle to substantially parallel to the axis of the spindle.

14. A fan structure as claimed in any preceding claim, wherein the structure is inside an apparatus of an aircraft;
wherein the first surface of the structure and the second surface of the structure are inside the apparatus; and
wherein the fan is configured to move the gas within the apparatus.

15. A fan structure as claimed in any of claims 1 to 13, wherein the structure is an external surface of an apparatus of an aircraft;
wherein the first surface of the structure is inside the apparatus;
wherein the second surface of the structure is outside the apparatus; and
wherein the fan is configured to move the gas from inside the apparatus to outside the apparatus and/or the fan is configured to move from outside the apparatus into the apparatus.
